# EUROPEAN PATENT SPECIFICATION

(11) **EP 1 888 658 B1**
(45) Date of publication and mention of the grant of the patent: **08.07.2009**
(21) Application number: 06763310.7
(22) Date of filing: 29.05.2006
(51) Int. Cl.: C08F 20/34, C08F 20/36, C08F 220/34, C08F 220/36

(54) **POLYMERIC NITROXIDES THEIR PREPARATION AND USE**
POLYMERNITROXIDE SOWIE IHRE HERSTELLUNG UND VERWENDUNG
NITROXYDES POLYMÈRES, LEUR SYNTHÈSE ET LEURS APPLICATIONS

(30) Priority: 08.06.2005 EP 05104974
(43) Date of publication of application: 20.02.2008
(73) Proprietor: Ciba Holding Inc., 4057 Basel (CH)
(72) Inventor: NESVADBA, Peter, CH-1723 Marly (CH); BUGNON FOLGER, Lucienne, CH-4148 Pfeffingen (CH)
(86) International application number: PCT/EP2006/062651
(87) International publication number: WO 2006/131451

(56) References cited:
- WO-A-99/28359

## Description

The instant Invention relates to a process for the preparation of polymeric nitroxide radicals by group transfer polymerization. Further aspects of the invention are the polymers containing the nitroxide radicals as well as their use, in particular as active electrode materials in organic radical batteries.

Known methods for making polymeric nitroxide radicals, start with firsfily polymerizing the respective sterically hindered amine and oxidizing it in a second step into the polymeric nitroxide. This is for example described in Makromol. Chem, 181, 595 (1980). The nitroxide content of thus prepared polymeric nitroxides never reaches 100% of the theoretical value, but remains at limiting 50-73%, despite of extremely long reaction times (21-70 h) and excess of oxidizing agent. This limited oxidability of polymeric amines is also described in Electrochimica Acta 50, 827 (2004) for the particular case of poly(4-methacryloylaxy-2,2,6,5-tetramethylpiperidine) where only 81% of the amine groups could be oxidized Into nitroxides.

The International Publication WO99/28359 describes the radical polymerisation of -N-OH monomers. Polymers comprising a radica N-O' are obtained from N-OH compounds by additional oxidation. In one of the examples the starting material is a homopolymer prepared by anionic polymerization of 4-methacryloyloxy-2,2,6,6,-tetramethyl(piperidin-1yloxyl). The detailed preparation of the polymer is not disclosed.

The incapability for complete oxidation seems to be inherent to the polymeric nature of the aminic nitroxide precursors. It is, for example, possible that some of the amine groups are hidden within the polymer coils and are thus not accessible for oxidation. Obviously, those applications for polymeric nitroxides requiring high nitroxide content will suffer from the low nitroxide concentration.
Hence, new methods for making polymeric nitroxides with a nitroxide content equal or near to the theoretical limit are highly desirable.

Surprisingly it has been found that suitable unsaturated acyl derivatives of nitroxides can be efficiently polymerized by means of Group Transfer Polymerization (GTP) to afford polymeric nitroxides having 100% of the theoretical nitroxide content or slightly below if additional crosslinking of the polymer with a nitroxide free crosslinker is performed. The term slightly below means between 90 and 100 %, preferably 95 and 100% and most preferred between 97 and 100% of the theoretical value based on the nitroxide monomer only.

The polymers obtained have nitroxide groups at every repeating unit of the polymer and therefore have 100% theoretic nitroxide content. This quantitative nitroxide content can not be achieved by the oxidation of the corresponding polymeric amines.

This makes the polymeric nitroxides, obtained by GTP particularly suitable for all applications where polymers with a high content of nitroxides per weight of the polymer are required. Typical examples for such applications are the use as stabilizers to prevent degradation of organic materials by heat, oxygen, actinic or electromagnetic radiation, as inhibitors to prevent unwanted polymerization of unsaturated monomers, as active electrode materials in organic radical batteries and as oxidation catalysts.

One aspect of the invention is a process for preparing polymeric nitroxides containing one or two nitroxide radicals per repeating unit, which process comprises
polymerizing a monomer of formula (I) 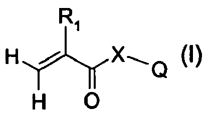 wherein
R₁ is CH₃ or H;
X is O or NR₂
Q is an open chain or cyclic organic group containing 1 or 2 nitroxide radicals and
R₂ is H, C₁-C₁₈alkyl; C₅-C₁₂cycloalkyl, benzyl, C₁-C₁₈alkoxycarbonyl or phenyl; or
R₂ has the same meaning as Q;
under group transfer polymerization conditions. (Anspruch 1)

An example for Q containing two nitroxide radicals is following structural formula: 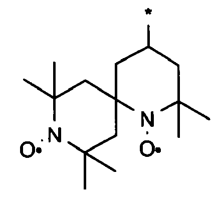 wherein * marks the point of attachment.

Preferably the polymeric nitroxide contains only 1 nitroxide radical per repeating unit and consequently Q is an open chain or cyclic organic group containing 1 nitroxide radical.

The polymerization of the nitroxide, containing monomer under group transfer polymerization conditions results in a polymer with maximum NO- capacity.

Preferred is a process wherein Q is a heterocyclic 5 or 6-membered radical of formula (II) 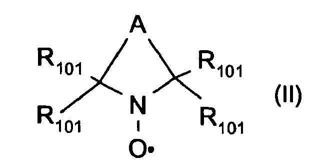 wherein A is a divalent group required to form a cyclic 5-or 6-membered ring, which may contain additional O or N atoms and the R₁₀₁ are independently C₁-C₆alkyl or two together with the linking carbon atom form a C₅-C₆cycloalkyl group. (Anspruch 2)
Preferably the R₁₀₁ are independently C₁-C₄alkyl and the heterocyclic ring is a derivative of a 6-membered tetraalkylpiperidine-N-oxyl, a 3,3,5,5-tetraalkyl-morpholin-2-one-N-oxyl, a 3,3,5,5-tetraalkyl-piperazin-2-one-N-oxy, a 3,3,5,5-tetraalkyl-piperazine-2,6-dione-N-oxyl or a derivative of a 5-membered 2,2,5,5-tetralkyl-2,5-dihydro-1H-pyrrole-N-oxyl, 2,2,5,5-tetraalkyl-pyrrolidine-N-oxyl, 2,2,4,4-tetraalkyl-oxazolidine-N-oxyl or 2,2,5,5-tetraalkylimidazolidin-4-one-N-oxyl. (Anspruch 3)

In a specific embodiment the monomer is of formula (Ia) 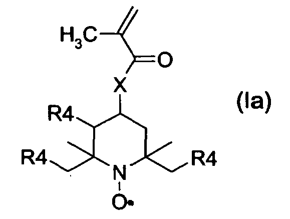 wherein
X is O or NR₂;
R₂ is H, C₁-C₁₈alkyl; C₅-C₁₂cycloalkyl, benzyl, C₁-C₁₈alkoxycarbonyl or phenyl; and
R₄ is CH₃ or H. (Anspruch 4)

Preferably R₄ is H.

The resulting nitroxide containg polymers are of the following structures: 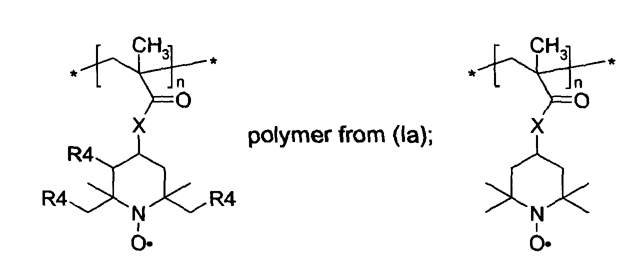 polymer from (Ib) wherein R₄ and X have the meaning as defined above and n is number from 10 to 10 000.

Particularly preferred is a process wherein the monomer is of formula (Ib) 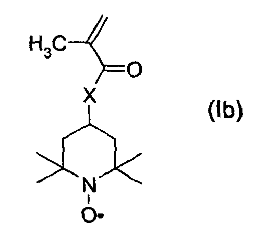 X is O or NR₂ and R₂ is C₁-C₄alkyl, cyclohexyl, benzyl, C₁-C₈alkoxycarbonyl or phenyl. (Anspruch 5)

In another embodiment the monomer is of formula (Ic)

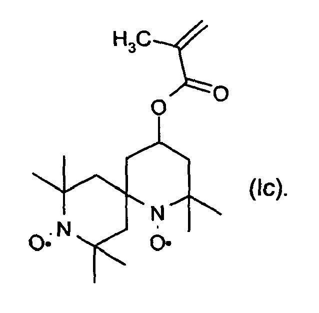

A particularly preferred single monomer compound is 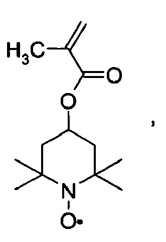 4-methacryloyloxy-2,2,6,6-tetramethylpiperidine-N-oxyl.

The number average molecular weight Mₙ of the non-crosslinked polymer depends on the amount of initiator used and is typically from 1000 to 1000 000, preferably from 2000 to 200 000 and in particular from 5000 to 50 000. The Mₙ of the crosslinked polymer is higher and its actual value depends on the amount of crosslinker.

The nitroxide containing monomers are known and can be prepared as for example described in J. Polym. Sci.: Polymer Chemistry Edition 12, 1407(1974), GB 2335190,(A-21567) GB 2342649(A-21850) or WO 96/24620. Further suitable nitroxides are described in US-A-4 581 429 or EP-A-621 878,. WO 98/13392(Akzo), WO 99/03894,(A-21384/21385) WO 00/07981 (A-21808), WO 99/67298,(A-21574) WO 02/4805 (Ketalcase 1-22293) and in WO 02/100831. (Iminoverb.22501)

Group transfer polymerization (GTP) of the nitroxide monomers can be performed under the broadest set of conditions, which are known to be effective for GTP. These are described in a vast patent and academic literature, such as for example in Adv. Polym. Sci. 167, 1, (2004)

The polymerization proceeds according to the following equation:

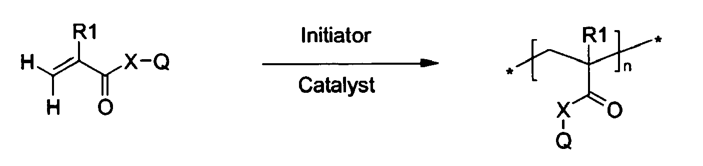

The initiator can be for example (1-methoxy-2-methyl-propenyloxy)-trimethyl-silane but other silylketene acetals may be also used. The silyl ketene acetal initiator can be also formed in *situ* from the nitroxide monomer using suitable silylating agents, such as for example: trimethylsilyl cyanide, trimethylsilyl chloride or others.

Preferably the group transfer polymerization is carried out in the presence of a silylketene acetal initiator. (Anspruch 6)

The amount of the initiator can be varied broadly. For example 0.01 to 10 mol-%, preferably 0.1 to 5 mol% and more preferably 0.2 to 3 mol%, based on the molar amount of monomer may be used. The ratio [Monomer] / [Catalyst] determines the molecular weight of the target polymeric nitroxide.

A variety of catalysts can be used in combination with the initiator. Preferred are nucleophilic catalysts, for example fluorides or bifluorides, carboxylates or bicarboxylates. The catalyst is used at about 0.1 -20 mol% based on the molar amount of the initiator, but it can sometimes be used also at higher or lower levels. Lewis acid catalysts such as for example ZnBr₂, ZnCl₂, HgCl₂ +J₂ or alkylaluminumchlorides are also suitable as catalysts.

For instance the group transfer polymerization is carried out in the presence of a catalyst selected from the group consisting of fluorides, bifluorides, carboxylates, bicarboxylates and Lewis acids. (Anspruch 7)

The polymerization can be carried out in many solvents, preferred are aliphatic or aromatic hydrocarbons or ethers, for example tetrahydrofurane (THF), dibutyl ether or methyl-t-butyl ether.

The polymerization can be carried out within a broad temperature range, for example between -100° C and + 100 °C, preferably between 0° C and 80 °C.

The reaction time may vary from several minutes, for example 10 minutes up to 20 hours. Typical reaction times are from 1 hour to 15 hours. Usually the reaction is carried out under normal pressure.

If higher molecular weights are desired, small amounts of a suitable polyfunctional GTP polymerizable monomers can be added. These monomers can, depending on their amount and functionality, lead to completely insoluble, crosslinked polymeric nitroxides. The nitroxide content will then be slightly less then 100%, usually between 90% and 100%, but still significantly higher than achievable by direct oxidation of the corresponding precursor amine.

The term "polyfunctional monomer" means that two or more GTP polymerizable functional groups are present in the monomer.

The amount of the polyfunctional GTP polymerizable monomer can be broadly varied, for example within 0.01 -10%, in particular 0.05 - 5%, preferably 0.1-5% based on the weight of the nitroxide containing monomer. (Anspruch 8)

Non limiting examples for polyfunctional GTP polymerizable monomers are:
Bispenol A dimethacrylate (CAS Nr. 3253-39-2)
Trimethylolpropane trimethacrylate (CAS Nr. 3290-92-4)
Ethylene glycol dimethacrylate (CAS Nr. 97-90-5)
Triethylene glycol dimethacrylate (CAS Nr. 109-16-0)
1,3-Propane diol dimethacrylate (CAS Nr. 7559-82-2)
1,2-Propane diol dimethacrylate (CAS Nr. 7559-82-2)
1,4-Butandiol dimethacrylate (CAS Nr. 2082-81-7)
1,3-Butandiol dimethacrylate (CAS Nr. 1189-08-8)
Diethylene glycol dimethacrylate (CAS Nr. 2358-84-1)
Tetraethylene glycol dimethacrylate (CAS Nr. 109-17-1)
1,6-Hexandiol dimethacrylate (CAS Nr. 6606-59-3)
Neopentylglykol dimethacrylate (CAS Nr. 1985-51-9)
1,4-Cyclohexane diol dimethacrylate (CAS Nr. 38479-34-4)
Glyceryl trimethacrylate (CAS Nr. 7401-88-9)
1,1,1-Trimethylol ethane trimethacrylate (CAS Nr. 19778-85-9)
Tris-hydroxyethyl-isocyanurate trimethacrylate (CAS Nr. n.a.)
Pentaerythritol tetramethacrylate (CAS Nr. 3253-41-6)

The polymeric nitroxide can be isolated by standard procedures, such as for example by precipitation in a suitable solvent. Suitable solvents are for example saturated hydrocarbons.

Another aspect of the invention is a polymeric nitroxide, containing one or two nitroxide radicals per repeating unit of formula (III) 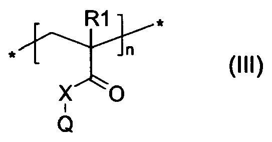 wherein **R₁** and Q are as defined above and n is a number from 10 to 10 000,
prepared by a GTP process as described above. (Anspruch 9)

Typically 100% of the nitroxide containing monomer has retained the nitroxide functionality after polymerization. In other words the maximum amount (100%) of nitroxide functionality is achieved with the instant process.

A further aspect of the invention is the use of a polymeric nitroxide prepared according to the process described above as active electrode material in organic radical batteries. (Anspruch 10)

The use of various nitroxide radicals as active component in electrode materials of batteries has been disclosed in EP 1 128 453. Since the electrode material must be insoluble in the battery electrolyte, polymeric nitroxides are of particular interest.

Nitroxide polymers as cathode active materials in organic radical batteries have already been described, for example, in Electrochimica Acta 50, 827 (2004). The preparation of 4-methacryloyloxy-2,2,6,6-tetramethylpiperidine, its free radical polymerization and subsequent oxidation of the polymer into the corresponding polymeric nitroxide is described.

However, the thus prepared nitroxide polymer does not contain 100% nitroxide radicals in the repeating units, since oxidation of the polymer does not convert all amine functionalities. The polymer does, therefore, not provide the full theoretical capacity for the organic radical battery.

In contrast, the nitroxide polymers of the instant invention provide 100% of the theoretical capacity, since all repeating units contain one or two nitroxide radicals. This is a significant advantage over prior art polymers.

Yet a further aspect of the instant invention is the use of a polymeric nitroxide prepared as described above to prevent degradation of organic materials by heat, oxygen, actinic or electromagnetic radiation, as inhibitor to prevent unwanted polymerization of unsaturated monomers and as oxidation catalyst. (Anspruch 11)

The following examples illustrate the invention.

### Example 1: GTP Polymerization of 4-methacryloyloxy-2,2,6,6-tetramethylpiperidine-N-oxyl

A 250 ml three neck flask equipped with stirrer, thermometer, reflux condenser and argon inlet is charged with carefully dried 4-methacryloyloxy-2,2,6,6-tetramethylpiperidine-N-oxyl (12.0g. 0.05 Mol), prepared as described in J. Polym. Sci.: Polymer Chemistry Edition 12, 1407 (1974). 50 ml of tetrahydrofurane (THF), freshly distilled from sodium/benzophenone, are added and the flask is filled with argon. Then (1-methoxy-2-methy)-propenyloxy)-trimethyl-silane (0.174 g, 0.001 mol, commercial product from Fluka) is added via syringe to the red solution. After 10 minutes stirring at 21°C a 1 mol-solution of tetrabutyl-ammonium fluoride in THF (0.030 ml, 0.00003 mol) is injected. Immediate exothermic reaction follows and the temperature of the reaction mixture rises to 47 ° C. The red, viscous solution is stirred at room temperature for 12 h, 1 ml of methanol is then added and the mixture is stirred for additional 5 minutes. The solution is then slowly poured into 500 ml hexane under vigorous stirring. The orange suspension is stirred for 1 h and filtered. The red solid is washed with hexane and dried at 50 °C/100 mbar to afford 11.5 g of poly(4-methacryloyloxy-2,2,6,6-tetramethylpiperidine-N-oxyl) as a red powder.

Elemental analysis for (C₁₃H₂₂NO₃)n; (244.33)n; calcd./ found: C 64.97/64.80; H 9.23/9.23; N 5.83 / 5.72.

GPC (polystyrene calibration): Mₙ= 13881, M_{w}= 41221, PDI=2.97

Nitroxide content: UV spectroscopical determination of absorbance at 462 nm of the polymer dissolved in CH₂Cl₂ at 50.88 mg/10 ml and 100.90 mg/10ml and calculation using the molar extinction coefficient of analytically pure 4-acetoxy-2,2,6,6-tetramethylpiperidine-N-oxyl reference indicated nitroxide content of 100.26%.

### Example 2: GTP Polymerization of 4-methacryloyloxy-2,2,6,6-tetramethylpiperidine-N-oxyl in the presence of 2 mol% ethylene glycol dimethacrylate.

The polymerization is carried out as described in Example 1 with the exception that ethylene glycol dimethacrylate (0.201 g, 0.001 mol) is added before the injection of the tetrabutyl-ammonium fluoride solution (0.1 ml, 0.0001 Mol). Poly(4-methacryloyloxy-2,2,6,6-tetramethylpiperidine-N-oxyl) is obtained as a red powder, 12.04 g.

GPC (polystyrene calibration): Mₙ= 16581, M_{w} 371763, PDI=22.41, which is indicative for a at least partially crosslinked polymer.

### Example 3: GTP Polymerization of 4-methacryloyloxy-2,2,6,6-tetramethylpiperidine-N-oxyl in the presence of 3.9 mol% ethylene glycol dimethacrylate

The polymerization is carried out as described in Example 1 with the exception that ethylene glycol dimethacrylate (0.385 g, 0.00194 mol, 3.88 mol%) is added before the injection of tetrabutyl-ammonium fluoride solution (0.1 ml, 0.0001 Mol). The polymerization solution transforms within approximately 10 seconds after the injection of the tetrabutyl-ammonium fluoride solution into a thick gel and its temperature rises from 22°C to 44 °C. Ethyl acetate (400 ml) and methanol (1 ml) are added after 1 h. The gel is crushed by vigorous stirring and the resulting orange suspension is cooled to -60 °C. The solid is isolated by suction filtration and is redispersed in 400 ml ethyl acetate and filtered again. The filter cake is stirred 12 h in 600 ml dichloromethane, the solid is then filtered off and dried at 60 °C/ 100 mbar till constant weight. The polymer is completely insoluble in tetrahydrofurane, methanol, CH₂Cl₂, toluene and dimethylformamide. A crosslinked poly(4-methacryloyloxy-2,2,6,6-tetramethylpiperidine-N-oxyl) is obtained as a red powder, 8.25 g.

The nitroxide content of this material is calculated to be 94.3%, under the assumption that all crosslinker is incorporated in the polymer.

Elemental analysis for (C₁₃H₂₂NO₃)n; (244.33)n; calcd./ found: C 64.97/63.56; H 9.23/9.16; N 5.83 / 5.61.

## Claims

1. A process for preparing polymeric nitroxides, containing one or two nitroxide radicals per repeating unit, which process comprises
polymerizing a monomer of formula (I) 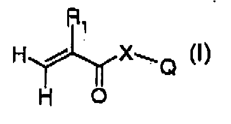 wherein
R₁ is CH₃ or H;
X is O or NR₂
Q is an open chain or cyclic organic group containing 1 or 2 nitroxide radicals and
R₂ is H, C₁-C₁₈alkyl; C₆-C₁₂cycloalkyl, benzyl, C₁-C₁₆alkoxycarbonyl or phenyl; or
R₂ has the same meaning as Q;
under group transfer polymerization conditions.

2. A process according to claim 1 wherein Q is a heterocyclic 5 or 6 membered radical of formula (II) 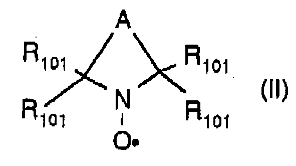 wherein A is a divalent group required to form a cyclic 5-or 6- membered ring, which may contain additional O or N atoms and the R₁₀₁, are independently C₁-C₆alkyl or two together with the linking carbon atom form a C₅-C₆cycloalkyl group.

3. A process according to claim 2 wherein the R₁₀₁ are independently C₁-C₄alkyl and the heterocyclic ring is a derivative of a 6-membered tetraalkylpiperidine-N-oxyl, a 3,3,5,5-tetraalkyl-morpholin-2-one-N-oxyl, a 3,3,5,5-tetraalkyl-piperazin-2-one-N-oxy, a 3,3,5,5-tetraalkyl-piperazine-2,6-dione-N-oxyl or a derivative of a 5-membered 2,2,5,5-tetralkyl-2,5-dihydro-1H-pyrrole-N-oxyl, 2,2,5,5-tetraalkyl-pyrrolidine-N-oxyl, 2,2,4,4-tetraalkyl-oxazolidine-N-oxyl or 2,2,5,5-tetraalkyl-imidazolidin-4-one-N-oxyl.

4. A process according to claim 1 wherein the monomer is of formula (Ia) 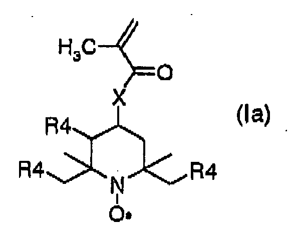 wherein
x is O or NR₂;
R₂ is H, C₁-C₁₈alkyl; C₅-C₁₂cycloalkyl, benzyl, C₁-C₁₈alkoxycarbonyl or phenyl; and
R₄ is CH₃ or H.

5. A process according to claim 4 wherein the monomer is of formula (Ib) 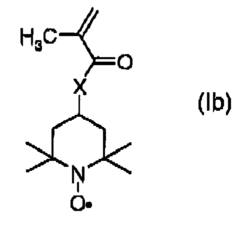 X is O or NR₂ and R₂ is C₁-C₄alkyl, cyclohexyl, benzyl, C₁-C₆alkoxycarbonyl or phenyl.

6. A process according to claim 1 wherein the group transfer polymerization is carried out in the presence of a silylketene acetal Initiator.

7. A process according to claim 1 wherein the group transfer polymerization is carried out in the presence of a catalyst selected from the group consisting of fluorides, bifluorides, carboxylates, bicarboxylates and Lewis acids.

8. A process according to claim 1 wherein an additional polyfunctional monomer is added in an amount of from 0.01 to 10 weight-%, based on the weight of the nitroxide containing monomer,

9. Use of a polymeric nitroxide containing one or two nitroxide radicals per repeating unit of formula (III) 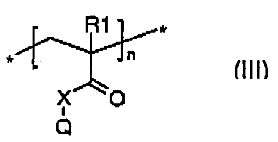 wherein R₁ and Q are as defined in claim 1 and n is a number from 10 to 10 000.
prepared by a Process according to claim 1.
as active electrode material in organic radical batteries,

10. Use of a polymeric nitroxide containing one or two nitroxide radicals per repeating unit of formula (III) 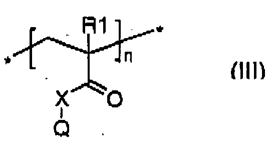 wherein R₁ and Q are as defined in claim 1 and n is a number from 10 to 10 000,
prepared by a process according to claim 1.
as stabilizer to prevent degradation of organic materials by heat, oxygen, actinic or electromagnetic radiation, as inhibitor to prevent unwanted polymerization of unsaturated monomers and as oxidation catalyst,

## Patentansprüche

1. Verfahren zur Herstellung von polymeren Nitroxiden, die ein oder zwei Nitroxid-Radikale pro wiederkehrende Einheit enthalten, wobei das Verfahren umfasst
Polymerisieren eines Monomers der Formel (I) 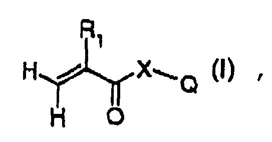 worin
R₁ CH₃ oder H darstellt;
X O oder NR₂ darstellt;
Q eine offen-kettige oder cyclische organische Gruppe, die 1 oder 2 Nitroxid-Radikale enthält, darstellt und
R₂ H, C₁-C₁₈-Alkyl; C₅-C₁₂-Cycloalkyl, Benzyl, C₁-C₁₈-Alkoxycarbonyl oder Phenyl darstellt; oder
R₂ die gleiche Bedeutung wie Q aufweist;
unter Gruppen-Transfer-Polymerisations-Bedingungen.

2. Verfahren nach Anspruch 1, wobei Q ein heterocyclisches 5- oder 6-gliedriges Radikal der Formel (II) 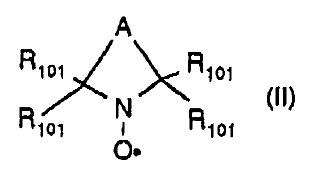 darstellt, worin A eine zweiwertige Gruppe darstellt, die erforderlich ist, um einen cyclischen 5- oder 6-gliedrigen Ring zu bilden, der zusätzliche O- oder N-Atome enthalten kann, und die R₁₀₁ unabhängig C₁-C₆-Alkyl darstellen oder zwei zusammen mit dem verbindenden Kohlenstoff-Atom eine C₅-C₆-Cycloalkyl-Gruppe bilden.

3. Verfahren nach Anspruch 2, wobei die R₁₀₁ unabhängig C₁-C₄-Alkyl darstellen und der heterocyclische Ring ein Derivat von einem 6-gliedrigen Tetraalkyl-piperidin-N-oxyl, einem 3, 3, 5, 5-Tetraalkyl-morpholin-2-on-N-oxyl, einem 3,3,5,5-Tetraalkyl-piperazin-2-on-N-oxyl, einem 3, 3, 5, 5-Tetraalkyl-pi perazin-2,6-dion-N-oxyl oder einem Derivat von einem 5-gliedrigen 2, 2, 5, 5-Tetraalkyl-2, 5-dihydro-1H-pyrrol-N-oxyl, 2,2, 5, 5-Tetraalkyl-pyrrolidin-N-oxyl, 2, 2, 4, 4-Tetraalkyl-oxazolidin-N-oxyl oder 2, 2, 5, 5-Tetraalkyl-imidazolidin-4-on-N-oxyl darstellt.

4. Verfahren nach Anspruch 1, wobei das Monomer die Formel (Ia) aufweist 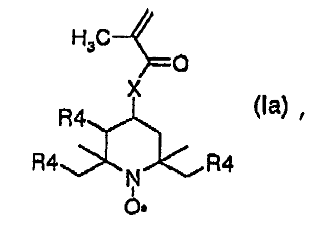 worin
X O oder NR₂ darstellt;
R₂ H, C₁-C₁₈-Alkyl, C₅-C₁₂-Cycloalkyl, Benzyl, C₁-C₁₈-Alkoxycarbonyl oder Phenyl darstellt; und
R₄ CH₃ oder H darstellt.

5. Verfahren nach Anspruch 4, wobei das Monomer die Formel (Ib) aufweist 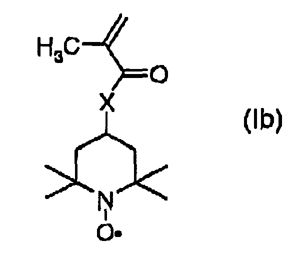 X O oder NR₂ darstellt; und R₂ C₁-C₄-Alkyl, Cyclohexyl, Benzyl, C₁-C₈-Alkoxycarbonyl oder Phenyl darstellt.

6. Verfahren nach Anspruch 1, wobei die Gruppen-Transfer-Polymerisation in Gegenwart eines Silylketen-acetal-Starters ausgeführt wird.

7. Verfahren nach Anspruch 1, wobei die Gruppen-Transfer-Polymerisation in Gegenwart eines Katalysators, ausgewählt aus der Gruppe, bestehend aus Fluoriden, Bifluoriden, Carboxylaten, Bicarboxylaten und Lewis-Säuren, ausgeführt wird.

8. Verfahren nach Anspruch 1, wobei ein zusätzliches polyfunktionelles Monomer in einer Menge von 0,01 bis 10 Gew.-%, bezogen auf das Gewicht von dem Nitroxid enthaltenden Monomer, zugesetzt wird.

9. Verwendung von einem polymeren Nitroxid, das ein oder zwei Nitroxid-Radikale pro wiederkehrende Einheit der Formel (III) 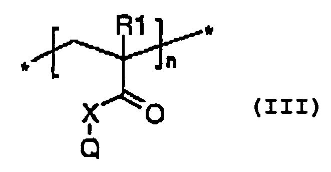 enthält, worin R₁ und Q wie in Anspruch 1 definiert sind und n eine Zahl von 10 bis 10 000 ist,
hergestellt durch ein Verfahren nach Anspruch 1,
als aktives Elektroden-Material in Organische Radikal Batterien.

10. Verwendung von einem polymeren Nitroxid, das ein oder zwei Nitroxid-Radikale pro wiederkehrende Einheit der Formel (III) 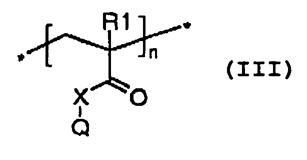 enthält, worin R₁ und Q wie in Anspruch 1 definiert sind und n eine Zahl von 10 bis 10 000 ist,
hergestellt durch ein Verfahren nach Anspruch 1,
als Stabilisator, um Abbau von organischen Materialien durch Wärme, Sauerstoff, aktinische oder elektromagnetische Strahlung zu verhindern, als Inhibitor, um unerwünschte Polymerisation von ungesättigten Monomeren zu verhindern und als Oxidations-Katalysator.

## Revendications

1. Procédé pour préparer des nitroxydes polymères, contenant un ou deux radicaux nitroxyde par motif de répétition, ledit procédé comprenant les étapes consistant à :
polymériser un monomère de formule (I) 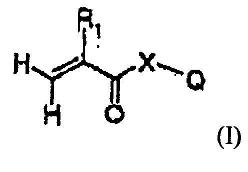 dans laquelle
R₁ est CH₃ ou H ;
X est O ou NR₂
Q est un groupe organique à chaîne ouverte ou cyclique contenant 1 ou 2 radicaux nitroxyde et R₂ est H, un alkyle en C₁-C₁₈ ; un cycloalkyle en C₅-C₁₂, un benzyle, un (alcoxy en C₁-C₁₈)carbonyle ou un phényle ; ou
R₂ a la même signification que Q ;
dans des conditions de polymérisation par transfert de groupe.

2. Procédé selon la revendication 1 dans lequel Q est un radical hétérocyclique
de 5 ou 6 chaînons de formule (II) 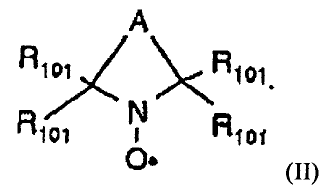 dans laquelle A est un groupe divalent requis pour former un cycle de 5 ou 6 chaînons cycliques, qui peut contenir des atomes O ou N additionnels et les groupes R₁₀₁ sont indépendamment un alkyle en C₁-C₆ ou deux d'entre eux conjointement avec l'atome de carbone de liaison forment un groupe cycloalkyle en C₅-C₆.

3. Procédé selon la revendication 2 dans lequel les groupes R₁₀₁ sont indépendamment un alkyle en C₁-C₄ et le cycle hétérocyclique est un dérivé d'un tétraalkylpipéridine-N-oxyle à 6 chaînons, un 3,3,5,5-tétraalkyl-morpholin-2-one-N-oxyle, un 3,3,5,5-tétraalkyl-pipérazin-2-one-N-oxyle, un 3,3,5,5-tétraalkyl-pipérazine-2,6-dione-N-oxyle ou un dérivé d'un 2,2,5,5-tétraalkyl-2,5-dihydro-1H-pyrrole-N-oxyl de 5 chaînons, 2,2,5,5-tétraalkyl-pyrrolidine-N-oxyle, un 2,2,4,4-tétraalkyl-oxazolidine-N-oxyle ou un 2,2,5,5-tétraalkyl-imidazolidin-4-one-N-oxyle.

4. Procédé selon la revendication 1 dans lequel le monomère est de formule (Ia) 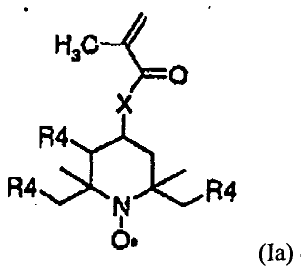 dans laquelle
X est O ou NR₂ ;
R₂ est un alkyle en C₁-C₁₈ ; un cycloalkyle en C₅-C₁₂, un benzyle, un (alcoxy en C₁-C₁₈)carbonyle ou un phényle ; et
R₄ est CH₃ ou H.

5. Procédé selon la revendication 4 dans lequel le monomère est de formule (Ib) 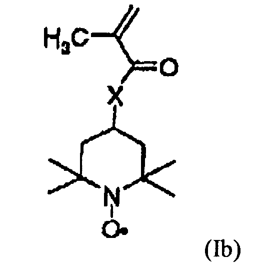 X est O ou NR₂ et R₂ est un alkyle en C₁-C₄, un cyclohexyle, un benzyle, un (alcoxy en C₁-C₈)carbonyle ou un phényle.

6. Procédé selon la revendication 1 dans lequel la polymérisation par transfert de groupe est effectuée en présence d'un initiateur d'acétal de silylcétène.

7. Procédé selon la revendication 1 dans lequel la polymérisation par transfert de groupe est effectuée en présence d'un catalyseur choisi dans le groupe constitué de fluorures, de bifluorures, de carboxylates, de bicarboxylates et d'acides de Lewis.

8. Procédé selon la revendication 1 dans lequel un monomère polyfonctionnel additionnel est ajouté en une quantité de 0,01 à 10 % en poids sur la base du poids du monomère contenant un nitroxyde.

9. Utilisation d'un nitroxyde polymère contenant un ou deux radicaux nitroxyde par motif de
répétition de formule (III) 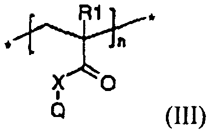 dans laquelle R₁ et Q sont comme défini dans la revendication 1 et n est un nombre de 10 à 10 000,
préparé par un procédé selon la revendication 1,
en tant que matériau actif d'électrode dans des batteries à radicaux organiques.

10. Utilisation d'un nitroxyde polymère contenant un ou deux radicaux nitroxyde par motif de
répétition de formule (III) 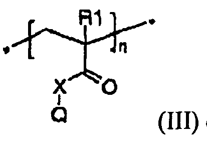 dans laquelle R₁ et Q sont comme défini dans la revendication 1 et n est un nombre de 10 à 10 000,
préparé par un procédé selon la revendication 1,
en tant que stabilisant pour prévenir la dégradation de matériaux organiques par la chaleur, l'oxygène, un rayonnement actinique ou électromagnétique, en tant qu'inhibiteur pour prévenir la polymérisation indésirable de monomères insaturés et en tant que catalyseur d'oxydation.
